# EUROPEAN PATENT SPECIFICATION

(11) **EP 0 776 123 B1**
(45) Date of publication and mention of the grant of the patent: **06.02.2002**
(21) Application number: 96118620.2
(22) Date of filing: 20.11.1996
(51) Int. Cl.: H04N 3/15

(54) **Three-line linear sensor**
Linearer Sensor mit drei Zeilen
Capteur linéaire à trois lignes

(30) Priority: 21.11.1995 JP 30253795
(43) Date of publication of application: 28.05.1997
(73) Proprietor: SONY CORPORATION, Tokyo (JP)
(72) Inventor: Hirama, Masahide, Shinagawa-ku, Tokyo (JP)
(74) Representative: Müller, Frithjof E., Dipl.-Ing.

(56) References cited:
- WO-A-92/06564
- US-A- 5 340 977
- PATENT ABSTRACTS OF JAPAN vol. 018, no. 038 (E-1495), 20 January 1994 & JP 05 268410 A (SONY CORP), 15 October 1993,

## Description

### BACKGROUND OF THE INVENTION

The present invention relates to a three-line linear sensor in accordance with the precharacterizing part of claim 1.

Inasmuch as R, G, B three-line color linear sensors are able to produce color information of high resolution as compared with a two-line color linear sensor comprising line with pixels of R, B dot-sequentially arrayed thereon or line of only G, they are frequently used in digital copiers and scanners. However, in the three-line color linear sensor, R, G, B sensor arrays (pixel arrays) are spaced apart spatially so that signals simultaneously outputted from the respective sensor arrays become information spaced apart spatially. Therefore, a position correction memory is provided in the outside of the three-line color linear sensor to correct positions of information spatially spaced apart. This position correction memory needs a large memory capacity because an amount of positions to be corrected increases as a distance between sensor centers of sensor arrays (hereinafter referred to as "line spacing") increases. Accordingly, in order to reduce a memory capacity and to make the system inexpensive, it is necessary to set a narrow line spacing.

Patent Abstracts of Japan, Vol. 018, No. 038 (E-1595), January 20, 1994, and JP-05268410 A (SONY CORPORATION), October 15, 1993, describe a known three-line color linear sensor corresponding to the precharacterizing part of claim 1. Said three-line color linear sensor has an electronic shutter provided at every line for controlling a storage time during which signal charges are accumulated in each photoelectric-conversion portion of sensor array.

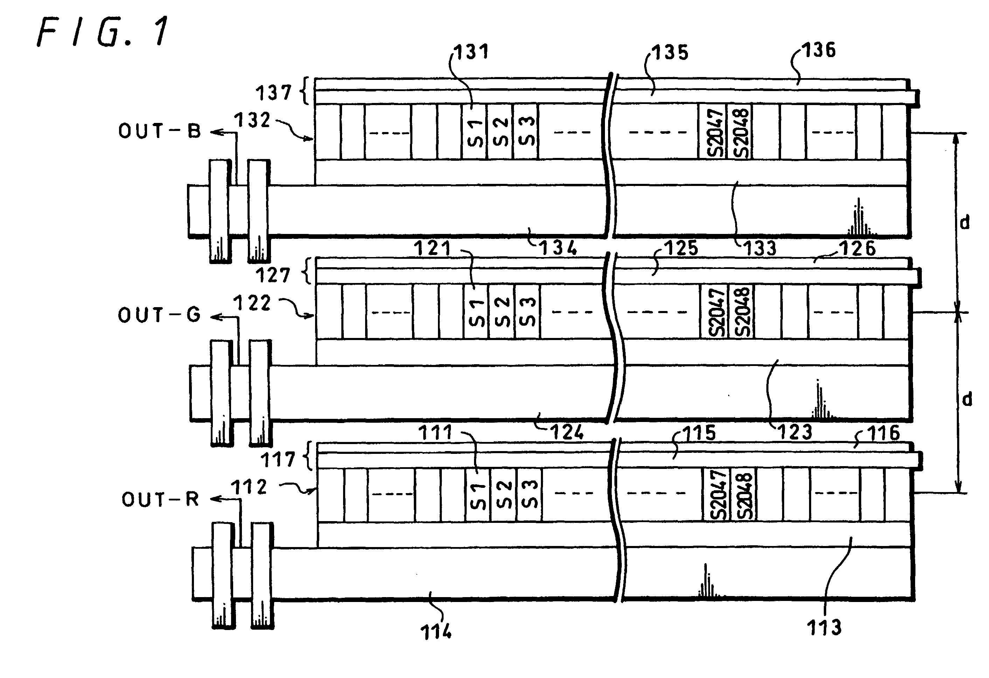

FIG. 1 of the accompanying drawings shows such three-line color linear sensor with electronic shutters.

As shown in FIG. 1, the three-line color linear sensor with electronic shutters includes lines having read-out gates 113, 123, 133 for reading out signal charges from photoelectric-converting sections 111, 121, 131 of sensor arrays 112, 122, 132 and CCD (charge-coupled device) analog shift registers 114, 124, 134 for transferring signal charges thus read out. In addition, electronic shutter structures 117, 127, 137 composing shutter gates 115, 125, 135 and shutter drains 116, 126, 136 are added to all lines.

Because the line spacings d are increased by the electronic shutter structures 117, 127, 137, the three-line color linear sensor with electronic shutter structures unavoidably requires a memory of large storage capacity as an external position correction memory, which makes the system very expensive. Accordingly, particularly in the three-line color linear sensor with electronic shutter structure, in order to reduce the memory capacity and to make the system inexpensive, it is very important to reduce the line spacings *d*.

### SUMMARY OF THE INVENTION

In view of the aforesaid aspect, it is an object of the present invention to provide a three-line linear sensor with an electronic shutter structure in which a line spacing can be reduced.

According to the present invention, there is provided a three-line linear sensor comprising a first linear sensor including a first pixel array having a first and a second side, a first read-out gate and a first charge transfer register, each of which is disposed on the first side of said first pixel array, a second linear sensor including a second pixel array having a first and a second side, a second read-out gate and a second charge transfer register, each of which is disposed on the first side of said second pixel array, the first side of the first pixel array and the first side of the second pixel array being the same side and pointing in the same direction, and said second charge transfer register being opposed to said first linear sensor, and a third linear sensor including a third pixel array having a first and a second side, a third read-out gate and a third charge transfer register, each of which is disposed on the same side of said third pixel array, said first, second, and third linear sensors being disposed in this order, and in parallel to one another, characterized in that said third linear sensor is disposed so that the third read-out gate and the third charge transfer register are disposed on the second side of said third pixel array, said second side being opposite to said first side so that said third linear sensor lays in an axial symmetric fashion with respect to said second linear sensor (claim 1). Advantageous developments thereof are specified in dependent claims 2 to 7.

In the thus arranged three-line linear sensor, since the first linear sensor does not have an electronic shutter structure, the first linear sensor can be disposed with a reduced line spacing between it and the second linear sensor. On the other hand, since the third linear sensor is disposed in an axial symmetry fashion with respect to the second linear sensor, the read-out gate and the charge transfer register are not interposed between it and the second linear sensor so that the respective electronic shutter structures of the second and third linear sensors can be arranged in this resultant space satisfactorily and that the line spacing between it and the second linear sensor can be set freely. The line spacing between the second and third linear sensors can be set to be substantially equal to the line spacing between the first and second linear sensors.

### BRIEF DESCRIPTION OF THE DRAWINGS

FIG. 1 is a diagram showing an example of a three-line color linear sensor with electronic shutter structure;
FIG. 2 is a diagram showing a three-line color linear sensor according to the present invention; and
FIG. 3 is a timing chart used to explain operation of the three-line color linear sensor shown in FIG. 2.

### DETAILED DESCRIPTION OF THE PREFERRED EMBODIMENT

A three-line color linear sensor according to the present invention will hereinafter be described in detail with reference to the drawings.

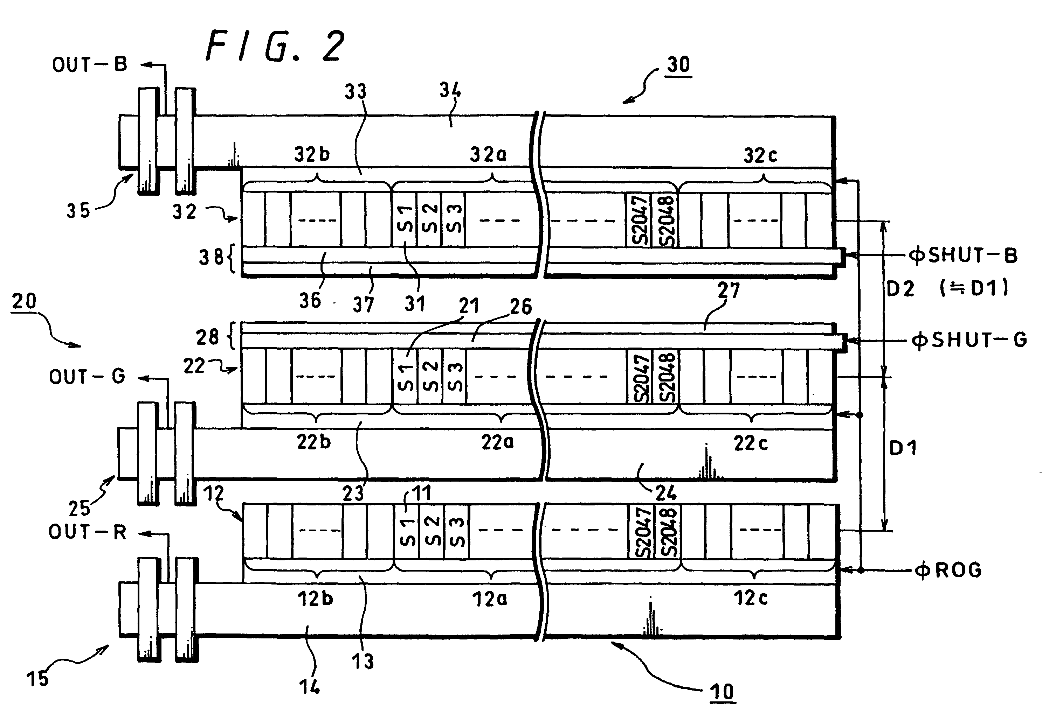

FIG. 2 is a diagram showing a three-line color linear sensor according to the present invention.

As shown in FIG. 2, the three-line color linear sensor according to the present invention includes first, second, and third color linear sensors 10, 20, 30 corresponding to R (red), G (green), B (blue). The first color linear sensor 10 corresponding to R includes a first pixel array (hereinafter referred to as "sensor array") 12 having a first and second side and comprising a number of photoelectric-converting sections (pixels) 11 arranged in straight line, a first read-out gate 13 for reading out signal charges photoelectrically-converted by each photoelectric-converting section 11 and a first charge transfer register (hereinafter referred to as "CCD analog shift register ") 14 for transferring signal charges thus read out, said first read-out gate 13 and said first charge transfer register 14 being disposed both on the first side of the first pixel array 12.

The sensor array 12 comprises an effective pixel section 12a of 2048 pixels (S1 through S2048), for example, and ineffective pixel sections 12b, 12c of a plurality of pixels provided ahead of or behind the effective pixel section 12a. A color filter (not shown) corresponding to R is disposed on a light-receiving screen. The ineffective pixel sections 12b, 12c are so-called optical black (OPB) sections shielded at the light-receiving screen side of each photoelectric-converting section 11. The CCD analog shift register 14 has at its end portion of transfer side disposed a charge-to-voltage converting unit 15 of a floating diffusion amplifier configuration, for example.

In the first color linear sensor 10, signal charges at the respective photoelectric-converting sections 11 of the sensor array 12 are read out through the first read-out gate 13 through the first CCD analog shift register 14 in response to a read-out gate pulse φROG applied to the first read-out gate 13. Then, the read-out signal charges are sequentially transferred by the first CCD analog shift register 14, further converted by the charge-to-voltage converting unit 18 into a signal charge and thereby developed as an R signal output OUT-R.

A second color linear sensor 20 corresponding to G will be described. Similarly to the first color linear sensor 10, the second color linear sensor 20 comprises a second sensor array 22 in which photoelectric-converting sections 21 are disposed linearly, said second sensor array 22 having a first and second side, a second read-out gate (23) and a second CCD analog shift register 24, each of which is disposed on the first side of the second sensor array 22. A color filter (not shown) corresponding to G is disposed on the light-receiving screen. In addition, the second color linear sensor 20 includes a horizontal electronic structure 28 comprising a shutter gate 26 and a shutter drain 27 disposed on the second side of the second sensor array 22. It is to be noted that the first side of the first pixel array 12 and the first side of the second pixel array are the same side and are pointing in the same direction.

The second color linear sensor 20 is disposed in parallel to the first color linear sensor 10 with a predetermined first line spacing D1 between it and the first color linear sensor 10 while the second CCD analog shift register 24 is opposed to the first color linear sensor 10. The first line spacing D1 will be referred to hereinafter as "distance between the sensor centers of the sensor arrays 12, 22 of the first and second color linear sensors 10, 20."

In the thus arranged second color linear sensor 20, when the read-out gate pulse φROG is applied to the second read-out gate 23, signal charges at the respective photoelectric-converting sections 21 of the second sensor array 22 are read out through the second read-out gate 23 to the second CCD analog shift register 24, further sequentially transferred by the second CCD analog shift register 24, converted into a signal voltage by the charge-to-voltage converting section 25 and then developed as a G signal output OUT-G. Moreover, when a G shutter pulse φSHUT-G is applied to the shutter gate 26, signal charges accumulated in the respective photoelectric-converting sections 21 of the second sensor array are discharged through the shutter gate 26 to the shutter drain 27, whereby the electronic shutter structure 28 carries out the shutter operation to control the storage time of signal charges.

A third color linear sensor 30 corresponding to B will be described. Similarly to the second color linear sensor 20, the third color linear sensor 30 comprises a third sensor array 32 in which photoelectric-converting sections 31 are disposed linearly, the third sensor array 32 having a first and second side, a third read-out gate 33 and a third CCD analog shift register 34, each of which is disposed on the second side of the third sensor array 32 and an electronic shutter structure 38 composing a shutter gate 36 and a shutter drain 37, each of which is disposed on the first side of the third sensor array 32. It is to be noted that the first side of the third sensor array 32 points to the same direction as the first sides of the first and second pixel arrays and the second side is opposite to said first sides. A color filter (not shown) corresponding to B is disposed on the light-receiving screen. The third color linear sensor 30 is disposed symmetrical with the second color linear sensor 20 with a second line spacing D2 substantially equal to the above-mentioned line spacing D1 on the opposite side of the first color linear sensor 10, wherein the first to third color linear sensors are disposed in this order in parallel.

In the thus arranged third color linear sensor 30, when the read-out gate pulse φROG is applied to the third read-out gate 33, signal charges at the respective photoelectric-converting sections 31 of the third sensor array 32 are read out through the third read-out gate 33 to the third CCD analog shift register 34, further sequentially transferred by the third CCD analog shift register 34, converted into a signal voltage by the charge-to-voltage converting section 35 and thereby developed as a B signal output OUT-B. When a B shutter pulse φSHUT-B is applied to the shutter gate 36, the electronic shutter structure 38 carries out the shutter operation to control the time during which signal charges are stored in the respective photoelectric-converting sections 31 of the sensor array 32.

In the three-line color linear sensor of R, G, B, if sensitivities of R, G, B, for example, are 5 V / (1x ^{·} s), 10 V / (1x ^{·} s), and 15 V / (1x ^{·} s), then when storage times of R, G, B are the same, a ratio of output voltages of *R,* G, B is given as 1 : 2 : 3. However, if the respective storage times of R, G, B are changed at every color, then output voltages can be set to substantially constant. In this case, the output voltages of respective colors can be set to be substantially constant by adjusting storage times of two colors with higher sensitivities based on the storage time of color with the lowest sensitivity.

In the three-line color linear sensor according to the present invention, of R, G, and B, an electronic shutter structure is removed from the first color linear sensor 10 corresponding to R with the lowest sensitivity but the electronic shutter structures 28, 38 are added to the color linear sensors 20, 30 corresponding to G, B with sensitivities higher than that of the color linear sensor corresponding to R.

According to the above-mentioned arrangement, as compared with the structure (see FIG. 1) in which the electronic shutter structures are added to all lines, the predetermined first line spacing D1 between the first color linear sensor 10 corresponding to R and the second color linear sensor 20 corresponding to G can be reduced by the amount corresponding to the omitted electronic shutter structure. As a consequence, it is possible to reduce the memory capacity of the position correction memory which is provided in the outside for correcting positions of each information of the three lines spaced apart spatially. Study of the experimental results done by the same assignee of the present application shows that the line spacing D1 could be reduced by half. Thus, the memory capacity can be reduced by half.

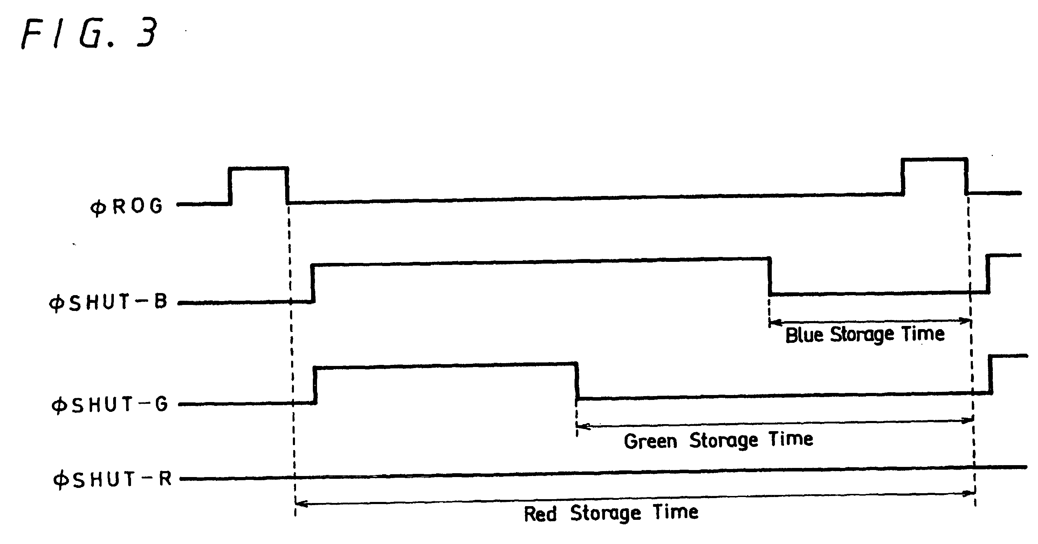

The shutter pulses φSHUT-G and φSHUT-B are applied to the electronic shutter structures 28, 38 of the second and third color linear sensors 20, 30 corresponding to G, B at timings shown by a timing chart of FIG. 3, whereby the storage time of the first color linear sensor 10 corresponding to R with the lowest sensitivity is made longest, the storage time of the second color linear sensor 20 corresponding to G with the sensitivity higher than that of the first color linear sensor 10 corresponding to G is made shorter than that of the first color linear sensor 10 corresponding to R and the storage time of the third color linear sensor 30 corresponding to B with the highest sensitivity is made shortest.

As described above, the output voltages of respective colors can be made substantially constant by adjusting the storage times of the respective second and third color linear sensors 20, 30 corresponding to G, B with the sensitivities higher than that of the color linear sensor 10 corresponding to R. Therefore, the respective output voltages of three lines obtained when the three-line color linear sensor takes a picture of white become substantially the same level, and hence a so-called white balance is established. Specifically, the respective storage times of the second and third color linear sensors 20, 30 corresponding to G, B are adjusted by the electronic shutter structures 28, 38 such that the output voltages of respective colors become substantially constant, thereby establishing a white balance. Thus, a picture quality can be improved.

On the other hand, if the third color linear sensor 30 would be disposed with its third read-out gate 33 and its third charge transfer register 34 on its first side like the second color linear sensor 20, then the third CCD analog shift register (34) is interposed between the second and third color linear sensors and as will be clear from the structure shown in FIG. 1. As a result, the second line spacing D2 between the second and third color linear sensors cannot be reduced to the line spacing D1 between the first and second color linear sensors 10 and 20. Therefore, the line spacings D1, D2 among the three lines become unequal.

If the line spacings D1, D2 among the three lines are unequal, then when the three-line color linear sensor is applied to a color copier or when a color image is reproduced in special reproduction mode such as reduction or expansion, there occurs a problem of color shift. For example, if the line spacing D1 between the first color linear sensor 10 corresponding to R and the second color linear sensor 20 corresponding to G corresponds to 4 lines, the line spacing D2 between the second color linear sensor 20 corresponding to G and the third color linear sensor 30 corresponding to B corresponds to 5 lines and a color image is reduced by 50 %, then a resolution of reduced color image becomes the half of the maximum resolution. Therefore, in the position correction memory, data obtained after two lines corresponds to data of G for line data of R and data obtained after 2.5 lines corresponds to data of B.

In this case, data obtained after 2 lines may be used as the data of G satisfactorily. However, since data obtained after 2.5 lines does not exist for the data of B, data obtained after 2.5 lines should be obtained by averaging data of 2.5 lines after and data of 3 line after, which process unavoidably causes a problem of color shift. If the reduction ratio/expansion ratio becomes an odd sum such as 33 %, then a color shift becomes more remarkable. From the above-mentioned reasons, the line spacings D1, D2 among the three lines should preferably be made equal.

In the three-line color linear sensor according to the present invention, the third color linear sensor 30 corresponding to B is disposed with respect to the second color linear sensor 20 in an axial symmetry fashion. As a result, since the CCD analog shift register 34 with a wide width is not interposed between the third color linear sensor 30 and the second color linear sensor 20, the line spacing D2 between the second and third color linear sensors 20, 30 can be reduced and also set to be substantially equal to the line spacing D1 between the first and second color linear sensors 10 and 20.

Specifically, the line spacing between the second and third color linear sensors 20 and 30 can be reduced as compared with the aforesaid arrangement (see FIG. 1). In addition, since a large enough space is maintained between the third and second color linear sensors 30 and 20, the electronic shutter structures 28, 38 of the second and third color linear sensors 20, 30 can be arranged with a space large enough.

As described above, according to the present invention, in the three-line linear sensor, since the first color linear sensor without electronic shutter is disposed with respect to the second and third linear sensor with the electronic shutter structures in an axial symmetry fashion, the line spacing between the first and second color linear sensors can be reduced by the amount corresponding to the omitted electronic shutter structure and also the line spacing between the second and third color linear sensors can be reduced and can be made substantially equal to the above-mentioned line spacing by the axis symmetry. Therefore, the memory capacity of the external position correcting memory can be reduced.

While the present invention is applied to the three-line color linear sensor as described above, the principle of the present invention may be applied to a black-and-white three-line linear sensor in which R, G, B light is separated by a prism and introduced into three sensors.

## Claims

1. A three-line linear sensor comprising:
a first linear sensor (10) including a first pixel array (12) having a first and a second side, a first read-out gate (13) and a first charge transfer register (14), each of which is disposed on the first side of said first pixel array (12);
a second linear sensor (20) including a second pixel array (22) having a first and a second side, a second read-out gate (23) and a second charge transfer register (24), each of which is disposed on the first side of said second pixel array (21), the first side of the first pixel array (12) and the first side of the second pixel array (22) being the same side and pointing in the same direction, and said second charge transfer register (24) being opposed to said first linear sensor (10): and
a third linear sensor (30) including a third pixel array (32) having a first and a second side. a third read-out gate (33) and a third charge transfer register (34), each of which is disposed on the same side of said third pixel array (32), said first, second, and third linear sensors (10, 20, 30) being disposed in this order, and in parallel to one another.
**characterized in that**
said third linear sensor (30) is disposed so that the third read-out gate (33) and the third charge transfer register (34) are disposed on the second side of said third pixel array (32), said second side pointing to the opposite direction as said first sides so that said third linear sensor (30) lies in an axial symmetric fashion with respect to said second linear sensor (20).

2. The three-line linear sensor as claimed in claim 1, in which said second linear sensor (20) is disposed with a predetermined first line spacing (D1) between it and said first linear sensor (10), and said third linear sensor (30) is disposed with a second line spacing (D2) to said second linear sensor (20). said second line spacing (D2) being substantially equal to said predetermined first line spacing (D1).

3. The three-line linear sensor as claimed in claim 1, wherein both or either of said second and third linear sensors (20, 30) has an electronic shutter structure (28. 38) respectively disposed on the other side of the respective pixel array (22, 32) than its read-out gate (23, 33) and its charge transfer register (24, 34).

4. The three-line linear sensor as claimed in one of the preceding claims, in which said first linear sensor (10) has the lowest sensitivity compared with the sensitivities of said second and third linear sensors (20, 30).

5. The three-line linear sensor as claimed in any of claims 3 or 4, in which outputs of said first, second, and third linear sensors (10, 20, 30) are made substantially constant by adjusting storage times of said second and third linear sensors (20, 30) with said electronic shutter structure (28, 38).

6. The three-line linear sensor as claimed in claim 3, in which said electronic shutter structure is a horizontal electronic shutter structure comprising a shutter gate (26, 36) and a shutter drain (27, 37).

7. The three-line linear sensor as claimed in claim 3, in which a linear sensor which has a higher sensitivity is given a shorter charge storage time by said electronic shutter structure (28, 38).

## Patentansprüche

1. Linearer Sensor mit:
- einem ersten linearen Sensor (10) mit einem ersten Pixelarray (12) mit einer ersten und einer zweiten Seite, einem ersten Auslesegatter (13) und einem ersten Ladungsübertragungsregister (14), die jeweils auf der ersten Seite des ersten Pixelarrays (12) angeordnet sind;
- einem zweiten linearen Sensor (20) mit einem zweiten Pixelarray (22) mit einer ersten und einer zweiten Seite, einem zweiten Auslesegatter (23) und einem zweiten Ladungsübertragungsregister (24), die jeweils auf der ersten Seite des zweiten Pixelarrays (21) angeordnet sind, wobei die erste Seite des ersten Pixelarrays (12) und die erste Seite des zweiten Pixelarrays (22) dieselbe Seite sind und in dieselbe Richtung zeigen und das zweite Ladungsübertragungsregister (24) dem ersten linearen Sensor (10) gegenüber steht; und
- einem dritten linearen Sensor (30) mit einem dritten Pixelarray (32) mit einer ersten und einer zweiten Seite, einem dritten Auslesegatter (33) und einem dritten Ladungsübertragungsregister (34), die jeweils auf derselben Seite des dritten Pixelarrays (32) angeordnet sind, wobei der erste, zweite und dritte lineare Sensor (10, 20, 30) in dieser Reihenfolge parallel zueinander angeordnet sind;
**dadurch gekennzeichnet, dass**
- der dritte lineare Sensor (30) so angeordnet ist, dass das dritte Auslesegatter (33) und das dritte Ladungsübertragungsregister (34) auf der zweiten Seite des dritten Pixelarrays (32) angeordnet sind, wobei diese zweite Seite in die entgegengesetzte Richtung wie die ersten Seiten zeigt, so dass der dritte lineare Sensor (30) axialsymmetrisch in Bezug auf den zweiten linearen Sensor (20) liegt.

2. Linearer Sensor mit drei Zeilen nach Anspruch 1, bei dem der zweite lineare Sensor (20) mit einem vorbestimmten ersten Zeilenabstand (D1) zwischen ihm und dem ersten linearen Sensor (10) angeordnet ist und der dritte lineare Sensor (30) mit einem zweiten Zeilenabstand (D2) zum zweiten linearen Sensor (20) angeordnet ist, wobei der zweite Zeilenabstand (D2) im Wesentlichen dem ersten Zeilenabstand (D1) entspricht.

3. Linearer Sensor mit drei Zeilen nach Anspruch 1, bei dem der zweite und/oder dritte lineare Sensor (20, 30) eine Elektronikverschlussstruktur (28, 38) aufweisen, die jeweils an der anderen Seite des jeweiligen Pixelarrays (22, 32) als das Auslesegatter (23, 33) und das Ladungsübertragungsregister (24, 34) angeordnet ist.

4. Linearer Sensor mit drei Zeilen nach einem der vorstehenden Ansprüche, bei dem der erste lineare Sensor (10) die geringste Empfindlichkeit im Vergleich mit den Empfindlichkeiten des zweiten und dritten linearen Sensors (20, 30) aufweist.

5. Linearer Sensor mit drei Zeilen nach einem der Ansprüche 3 oder 4, bei dem die Ausgangssignale des ersten, zweiten und dritten linearen Sensors (10, 20, 30) dadurch im Wesentlichen gleich gemacht sind, dass die Speicherzeiten des zweiten und dritten linearen Sensors (20, 30) durch die Elektronikverschlussstruktur (28, 38) eingestellt sind.

6. Linearer Sensor mit drei Zeilen nach Anspruch 3, bei dem die Elektronikverschlussstruktur eine horizontale Elektronikverschlussstruktur mit einem Verschlussgate (26, 36) und einem Verschlussdrain (27, 37) ist.

7. Linearer Sensor mit drei Zeilen nach Anspruch 3, bei dem ein linearer Sensor mit höherer Empfindlichkeit durch die Elektronikverschlussstruktur (28, 38) mit kürzerer Ladungsspeicherzeit versehen ist.

## Revendications

1. Capteur linéaire à trois lignes comprenant :
un premier capteur linéaire (10) comprenant un premier jeu de pixels (12) ayant un premier et un second côté, une première grille d'extraction (13) et un premier registre de transfert de charges (14), dont chacun est disposé sur le premier côté dudit premier réseau de pixels (12) ;
un second capteur linéaire (20) comprenant un second réseau de pixels (22) ayant un premier et un second côté, une seconde grille d'extraction (23) et un second registre de transfert de charges (24), dont chacun est disposé du premier côté dudit second réseau de pixels (21), ledit premier côté du premier réseau de pixels (12), et le premier côté du second réseau de pixels (22) étant du même côté et pointant dans la même direction, et ledit second registre de transfert de charges (24) étant opposé audit premier capteur linéaire (10) ; et
un troisième capteur linéaire (30) comprenant un troisième réseau de pixels (32) ayant un premier et un second côté, et une troisième grille d'extraction (33) et un troisième registre de transfert de charges (34), dont chacun est disposé du même côté dudit troisième réseau de pixels (32), lesdits premier, second et troisième capteurs linéaires (10, 20, 30) étant disposés dans cet ordre, et en parallèle les uns aux autres
**caractérisé en ce que**
ledit troisième capteur linéaire (30) est disposé pour que la troisième grille d'extraction (33) et le troisième registre de transfert de charges (34), soient disposées sur le second côté dudit troisième réseau de pixels (32), ledit second côté pointant dans la direction opposée audit premier côté pour que ledit troisième capteur linéaire (30) se trouve dans une symétrie axiale par rapport audit second capteur linéaire (20).

2. Capteur linéaire à trois lignes selon la revendication 1, dans lequel ledit second capteur linéaire (20) est disposé avec un premier espacement de lignes prédéterminées (D1) entre elles et ledit premier capteur linéaire (10), et ledit troisième capteur linéaire (10) est disposé par rapport au second espacement de lignes (D2) audit second capteur linéaire (20), ledit second espacement de lignes (D2) étant substantiellement égal audit premier espacement de lignes prédéterminées (D1).

3. Capteur linéaire à trois lignes selon la revendication 1, dans lequel l'un ou l'autre desdits second et troisième capteur linéaire (20, 30) possède une structure d'obturateur électronique (28, 38) respectivement disposée de l'autre côté du réseau de pixels respectif (22, 32) par rapport à sa grille d'extraction (23, 33) et son registre de transfert de charges (24, 34).

4. Capteur linéaire à trois lignes selon l'une quelconque des revendications précédentes, dans lequel ledit premier capteur linéaire (10) possède une sensibilité inférieure comparée aux sensibilités desdits second et troisième capteurs linéaires (20, 30).

5. Capteur linéaire à trois lignes selon l'une quelconque des revendications 3 ou 4, dans lequel les sorties desdits premier, second et troisième capteurs linéaires (10, 20, 30) sont rendues substantiellement constantes en ajustant des temps de stockage desdits second et troisième capteurs linéaires (20, 30) avec ladite structure d'obturateur électronique (28, 38).

6. Capteur linéaire à trois lignes selon la revendication 3, dans lequel ladite structure d'obturateur électronique est une structure d'obturateur électronique horizontale comprenant une grille d'obturateur (26, 36) et un drain d'obturateur (27, 37).

7. Capteur linéaire à trois lignes selon la revendication 3, dans lequel un capteur linéaire qui a une sensibilité plus élevée reçoit un temps de stockage de charges plus court par ladite structure d'obturateur électronique (28, 38).
